# EUROPEAN PATENT SPECIFICATION

(11) **EP 3 450 158 B1**
(45) Date of publication and mention of the grant of the patent: **12.02.2020**
(21) Application number: 18190231.3
(22) Date of filing: 22.08.2018
(51) Int. Cl.: B31D 1/02

(54) **MANUFACTURING DEVICE OF LAMINATED LABEL BODY**
HERSTELLUNGSVORRICHTUNG VON LAMINIERTEN ETIKETTENKÖRPERN
DISPOSITIF DE FABRICATION DE CORPS D'ÉTIQUETTES STRATIFIÉ

(30) Priority: 30.08.2017 JP 2017165478
(43) Date of publication of application: 06.03.2019
(73) Proprietor: Miyakoshi Printing Machinery Co., Ltd., Narashino-shi Chiba 275-0016 (JP)
(72) Inventor: FUJIWARA, Reishi, Daisen-City, Akita 019-1605 (JP)
(74) Representative: Office Freylinger

(56) References cited:
- EP-A1- 3 156 219
- WO-A1-2016/033675
- DE-A1- 2 063 483
- JP-A- 2002 052 629
- JP-A- 2012 206 335

## Description

### Technical Field

The present invention relates to a device for manufacturing a laminated label body in which multiple labels are laminated in a form of steps.

### Background art

Patent Document 1 discloses a manufacturing device of a laminated label body (a manufacturing device of an assembly of continuous adhesive articles in Patent Document 1).

The manufacturing device of the laminated label body is provided with a label feeding device (a label feeding portion in Patent Document 1) for feeding a mount to which multiple labels are stuck, a peeling device (a peeling portion in Patent Document 1) for peeling off the label from the mount supplied from the label feeding device, a release paper feeding device (a release paper feeding portion in Patent Document 1) for feeding a release paper, and a guide portion for guiding the peeled-off label to the mount and for sticking the label on the mount.

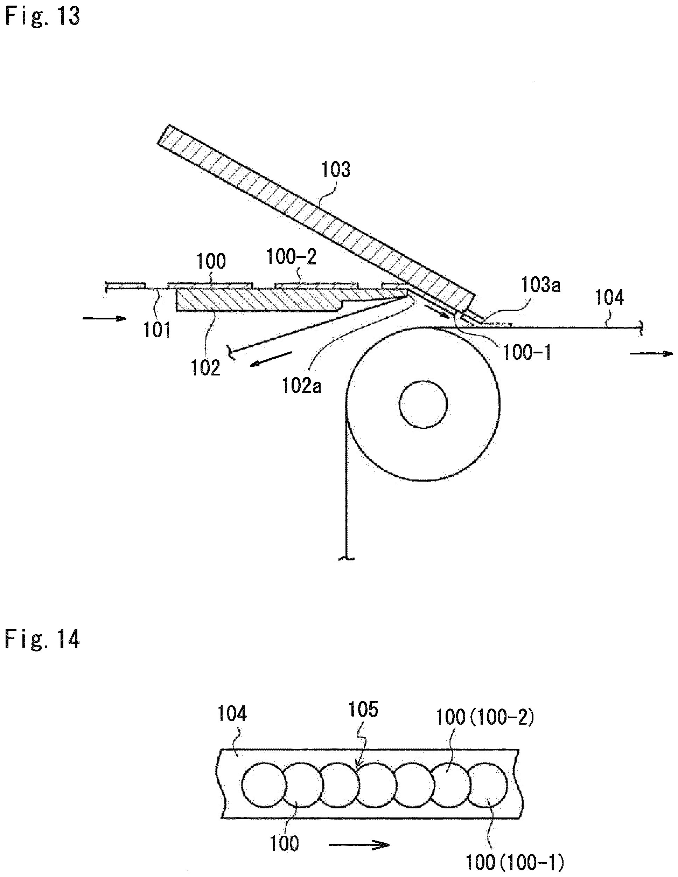

And, the label 100 is peeled off from the mount 101 by folding back the mount 101 around a part at an end 102a of a peeling plate 102 as illustrated in Fig.13.

A first label 100-1 which is firstly peeled off from the mount 101 is fed to an upper surface of a release paper 104 along the guide portion 103, and the first label 100-1 is stuck to the release paper 104. Thereafter, the first label 100-1 is conveyed together with the release paper 104.

A second label 100-2 which is secondly peeled off from the mount 101 is fed to an upper surface of the first label 100-1 along the guide portion 103, and then an end of the second label 100-2 in a conveying direction is stuck to a rear end of the first label 100-1 in the conveying direction one on top of another and other part of the second label 100-2 is stuck to the release paper 104.

That is the second label 100-2 is stuck over the first label 100-1 and the release paper 104.

Third and succeeding labels 100 which are thirdly or thereafter peeled off are stuck over the preceding label 100 and the release paper 104 as well as the second label 100-2. As described above, multiple labels 100 are sequentially and continuously stuck to the release paper 104 in a series as illustrated in Fig. 14, so that the laminated label body 105 (the assembly of continuous adhesive articles in Patent Document 1) laminating the multiple labels 100 in a form of steps is manufactured. WO 2016/033675 A1 shows a further laminated label body manufacturing device for sticking labels in overlapping manner to a release paper wherein the peeling device for peeling off the labels comprises a peeling roller. EP 3 156 219 A1 relates to another laminated label body manufacturing device for sticking labels in overlapping manner without using a release paper and discloses an adjustment mechanism for changing an angle of the peeling plate.

### Prior art document

### Patent document

[Patent Document 1] Japanese Patent Laid-Open No. 2012-206335

### Summary of the Invention

### Technical Problem

In a conventional manufacturing device of the laminated label body, the first label 100-1 is stuck to the release paper 104 when it passes through a gap between an end 103a of the guide portion 103 and the release paper 104, as shown by two-dot chain lines in Fig. 13.

The second label 100-2 is stuck to the first label 100-1 when it passes through a gap between the end 103a of the guide portion 103 and the first label 100-1 which has been stuck to the release paper 104, and thereafter stuck to the release paper 104 when it passes through the gap between the end 103a of the guide portion 103 and the release paper 104.

On the other hand, the release paper 104 may be displaced downward when the label 100 passes through the end 103a of the guide portion 103 in some cases. When the release paper 104 is displaced downward, sticking of the first label 100-1 to the release paper 104, sticking of the second label 100-2 to each of the first label 100-1 and the release paper 104, and sticking of the third and succeeding labels 100 to each of the preceding label and the release paper 104 become insufficient, so that the stuck label 100 may be peeled off in some cases.

The present invention has been made in view of the aforementioned prior-art problems and has an object to provide a manufacturing device of a laminated label body capable of manufacturing the laminated label body from which a label is prevented from being peeled off.

### Solution to Problem

This problem is solved by a manufacturing device comprising the features according to claim 1. The present invention is a manufacturing device of a laminated label body including; a label feeding device for conveying a mount to which labels are stuck at a first conveying speed; a peeling device for peeling off the labels from the mount conveyed at the first conveying speed; a release paper feeding device for conveying a release paper at a second conveying speed; and a lamination device for sticking the labels peeled off from the mount by the peeling device to the release paper conveyed at the second conveying speed, wherein the lamination device comprises a laminating roller for pressing and sticking the label peeled off from the mount to an upper surface of the release paper and a supporting member which is in contact with a lower surface of the release paper, and wherein the second conveying speed is lower than the first conveying speed, and an end in a conveying direction of the label peeled off from the mount is overlapped with a rear end in the conveying direction of a preceding label which has been peeled off from the mount and stuck to the release paper in advance, so that the label is stuck over the preceding label and the release paper.

In the manufacturing device of the laminated label body of the present invention, the lamination device includes a moving mechanism that moves the laminating roller in the conveying direction of the release paper; the supporting member is provided over a range of movement of the laminating roller; and the peeling device includes a peeling plate and an angle adjustment mechanism, and is configured such that the mount is folded back at a sharp angle around an end of the peeling plate to peel off the label from the mount while passing through the end of the peeling plate, and the angle adjustment mechanism changes an insertion angle of the label peeled off directed to the laminating roller by changing an angle of the peeling plate to a horizontal plane.

With the configuration, a distance from the end of the peeling plate of the peeling device to the laminating roller can be set to a value suitable for the length of the label in the conveying direction by moving the laminating roller in the conveying direction of the release paper by the moving mechanism.

Besides, when the distance from the end of the peeling plate to the laminating roller is changed by moving the laminating roller in the conveying direction of the release paper, the label which is peeled from a part at the end of the peeling plate can be conveyed for the laminating roller by adjusting the angle of the peeling plate to the horizontal plane.

Therefore, the laminated label body can be produced by using the labels which are different in the length in the conveying direction.

In the manufacturing device of the laminated label body of the present invention, there can be formed the manufacturing device of the laminated label body, wherein the label feeding device and the release paper feeding device are configured such that each of the first conveying speed and the second conveying speed can be controlled alone.

With the configuration, an amount of lapping of a rear end of the preceding label in the conveying direction and an end of a following label in the conveying direction can be adjusted by changing a speed ratio of the first conveying speed and the second conveying speed alone.

In the manufacturing device of the laminated label body of the present invention, there can be formed the manufacturing device of the laminated label body, wherein meandering arresters are provided upstream of the peeling device in a mount conveying path of the label feeding device and upstream of the lamination device in a release paper conveying path of the release paper feeding device, respectively.

With the configuration, since a side edge of the label peeled off and conveyed to the lamination device is always at a fixed position, and a side edge of the release paper conveyed to the lamination device by the release paper feeding device is always at a fixed position, the label can be stuck to an appropriate position of the release paper by the lamination device.

In the manufacturing device of the laminated label body of the present invention, there can be formed the manufacturing device of the laminated label body, wherein the lamination device provided with a pressing force adjustment mechanism to adjust a pressing force of the laminating roller acting on the release paper.

With the configuration, since the pressing force of the laminating roller acting on the release paper may be set to a value suited to a type of the labels, different kinds of the labels can be stuck to the release paper rigidly.

### Advantageous Effects of the Invention

According to the manufacturing device of the laminated label body of the present invention, the laminated label body from which a label is prevented from being peeled off can be produced.

### Brief Description of the Drawings

Fig. 1 is a front view illustrating a whole of a manufacturing device of a laminated label body.
Fig. 2 is a view for explaining a label paper.
Fig. 3 is an enlarged front view illustrating a peeling device and a lamination device.
Fig. 4 is a view for explaining a peeling-off operation and a laminating operation of a label.
Fig. 5 is a plan view of the laminated label body.
Fig. 6 is a front view showing a peeling plate in which an angle to a horizontal plane is changed.
Fig. 7 is a front view showing the peeling plate in which an angle to the horizontal plane is changed.
Fig. 8 is an enlarged front view of the peeling device.
Fig. 9 is a side view of the peeling device as shown in Fig. 8.
Fig. 10 is an enlarged plan view of the lamination device.
Fig. 11 is a plan view of the lamination device as shown in Fig. 10.
Fig. 12 is an enlarged view of A portion of the lamination device as shown in Fig. 11.
Fig. 13 is a view for explaining a label laminating portion of a conventional manufacturing device of the laminated label body.
Fig. 14 is a plan view of the conventional manufacturing device of the laminated label body.

### Description of the Embodiments

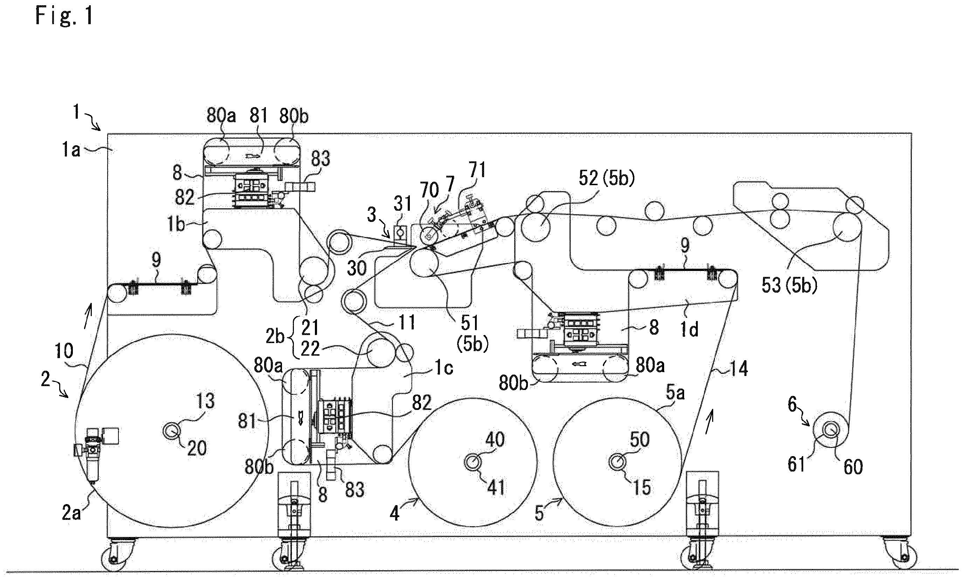

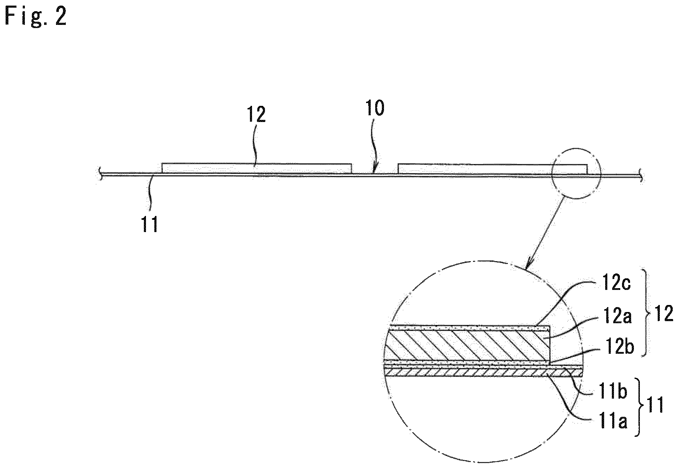

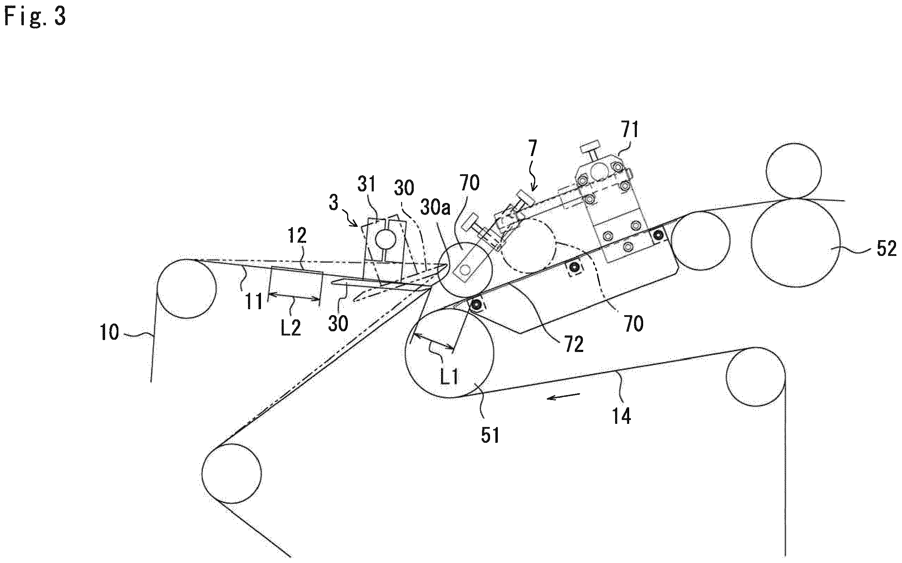

An embodiment of a manufacturing device of a laminated label body of the present invention will be described with reference to Figs. 1 to 3. Fig. 1 is a front view illustrating the whole of the manufacturing device of the laminated label body, Fig. 2 is a view for explaining a label paper, and Fig. 3 is an enlarged front view illustrating a peeling device and a lamination device.

As shown in Fig. 1, the manufacturing device of the laminated label body 1 is provided with a main body frame 1a.

The main body frame 1a is provided with a label feeding device 2, a peeling device 3, a mount winding device 4, a release paper feeding device 5, a label winding device 6 and a lamination device 7 and so forth.

A label paper 10 to use for the manufacturing device of laminated label body 1 includes a mount 11 and a number of labels 12 which are stuck to the mount 11, as shown in Fig. 2. The mount 11 is sometimes referred to as a release paper.

As shown in Fig. 2, the mount 11 comprises a release layer 11b which is formed on a surface of the substrate 11a. A Surface of the mount 11 is a release surface.

The label 12 is provided with an adhesion layer 12b formed on a rear surface of a label substrate 12a and a release layer 12c formed on a front surface of the label substrate 12a which is a printing surface.

A rear surface of the label 12 is an adhesion surface and a front surface of the label 12 is a release surface.

The label paper 10 is produced as follows. At first, printings are successively carried out on a surface of label substrate 12a while the label substrate 12a is adhered to the mount 11, and then the printed surface of the label substrate 12a is covered by the release layer 12c.

Thereafter, the label substrate 12a, the adhesion layer 12b and the release layer 12c are cut into a predetermined shapes and removed except printed parts (that is, half- cutout), and their remaining printed parts are provided for the labels 12. Besides, a way of production of the label paper 10 is not limited to the above, the label paper can be produced in any arbitral way.

The label feeding device 2 includes a paper feeding portion 2a which feeds the label paper 10 and a conveying portion 2b which conveys the fed label paper 10 toward the peeling device 3. The paper feeding portion 2a is provided with a paper feeding shaft 20 to which a paper tube 13 is detachably attached, the label paper 10 is wound around paper tube 13. The paper feeding shaft 20 is provided with a powder brake (not shown).

The conveying portion 2b includes a first pull roller 21 for conveying the label paper 10 (the mount 11) which is fed from the paper feeding portion 2a, a second pull roller 22 which is located downstream of the first pull roller 21 in the conveying direction of the label paper 10, and a motor (not shown) for rotationally driving each of the first pull roller 21 and the second pull roller 22 individually (that is, independently).

The peeling device 3 peels off the label 12 from the mount 11 of the label paper 10 which is conveyed by the conveying portion 2b of the label feeding device 2. And, the label 12 peeled off is conveyed toward the lamination device 7.

That is, the peeling device 3 includes a peeling plate 30 and an angle adjustment mechanism 31.

As shown in Fig. 3, the peeling plate 30 is planar directed to the conveying direction of the label paper 10 conveyed by the conveying portion 2b of the label feeding device 2, and an end 30a (that is, an end in a direction toward the conveying direction of the label paper 10) of the peeling plate 30 is opposite to the lamination device 7.

The angle adjustment mechanism 31 is configured such that an angle of the peeling plate 30 to a horizontal plane can be changed within a range between a state shown by a solid line and a state shown by two-dot chain line in Fig. 3.

As shown in Fig. 1, the peeling plate 30 of the peeling device 3 is provided on a downstream side of the first pull roller 21 in the conveying direction of the label paper 10 and on the upstream side of the second pull roller 22 in the conveying direction of the label paper 10. In other words, the peeling pate 30 is provided in the mount conveying path of the label feeding device 2.

The mount winding device 4 winds the mount 11 from which the label 12 of the label paper 10 has been peeled off.

That is, the mount winding device 4 includes a winding shaft 40, a paper tube for winding 41 which is detachably attached to the winding shaft 40 and a motor (not shown) for rotationally driving the winding shaft 40 alone.

Next, a description will be made about an operation of peeling off the label 12 from the mount 11 while conveying the label paper 10 and winding up the mount 11 from which the label 12 has been peeled off.

The paper tube 13 around which the label paper 10 is wound in a roll shape is attached to the paper feeding shaft 20, and then the label paper 10 which is a roll shaped wound paper is set on the paper feeding portion 2a.

The mount 11 of the set label paper 10 is conveyed from the first pull roller 21 via the end 30a of the peeling plate 30 and is folded back toward the second pull roller 22 and an end edge of the folded-back mount 11 conveyed via the second pull roller 22 is fixed to the paper tube for winding 41.

In this state, each of the first pull roller 21, the second pull roller 22 and the winding shaft 40 is rotationally driven by driving each of the motors of the first pull roller 21, the second pull roller 22 and the winding shaft 40 and thus the mount 11 of the label paper 10 is conveyed at a first conveying speed.

The mount 11 of the label paper 10 is passed through the end 30a of the peeling plate 30 at a sharp angle and conveyed toward the mount winding device 4. The first conveying speed at which the label paper 10 is conveyed is controlled by changing rotational speed of each of the motors of the first pull roller 21, the second pull roller 22 and the winding shaft 40. In other words, the label feeding device 2 is configured such that the first conveying speed at which the label paper 10 (the mount 11) is conveyed can be controlled alone. During passing of the mount 11 through the end 30a of the peeling plate 30 at a sharp angle, the label 12 to be a product is sequentially peeled off from the mount 11, and the label 12 is completely peeled off from the mount 11, when the label 12 has passed through the end 30a of the peeling plate 30, and thus the label paper 10 is separated into the mount 11 and the label 12.

The label 12 peeled off from the mount 11 is conveyed toward the lamination device 7.

The mount 11 from which the label 12 has been peeled off is wound on the paper tube for winding 41 of the mount winding device 4.

Since the mount 11 from which the label 12 has been peeled off is wound on the paper tube for winding 41 of the mount winding device 4 in this way, the mount 11 in a roll shape from which the label 12 has been peeled off can be removed from the main body frame 1a by removing the paper tube for winding 41 from the winding shaft 40.

In addition the mount 11 from which the label paper 12 has been peeled off may be dropped and stored in a container for recovery which is mounted on the main body frame 1a without using the mount winding device 4.

As shown in Fig.1, meandering arrester (web guides) 8 which automatically perform an operation to keep a side edge of the mount 11 at a fixed position are provided between the paper feeding shaft 20 and the first pull roller 21 (that is, upstream of the peeling device 3) in the mount conveying path and between the second pull roller 22 and the winding shaft 40 (that is, downstream of the peeling device 3) in the mount conveying path, respectively. The side edge of the mount 11 is a side edge (edge) which is continuous in the conveying direction of the mount 11.

Because the meandering arrester 8 are provided, the mount 11 can be conveyed from the paper feeding shaft 20 to the winding shaft 40 without meandering.

The meandering arrester 8 is provided with a bracket 81 including a pair of rollers 80a (paper charging side roller), 80b (paper discharging side roller), a swing source (not shown) which is located under the bracket 81 while engaging with the bracket 81 to swing the bracket 81, a controller 82 for the swing source, and a sensor 83 to detect a misalignment of the side edge of the mount 11. The controller 82 for the swing source and the sensor 83 are attached to a paper feeding side auxiliary frame 1b and a paper winding side auxiliary frame 1c, respectively.

That is, the meandering arresters 8 are attached to the paper feeding side auxiliary frame 1b and the paper winding side auxiliary frame 1c respectively.

The meandering arrester 8 is operated as follows.

Axis of the pair of rollers 80a, 80b is orthogonal to the conveying direction of the mount 11 and the pair of rollers 80a, 80b is attached to the bracket 81 at an interval in the conveying direction.

A roller set comprising the pair of rollers 80a, 80b and the bracket 81 which supports the rollers is turned around a fulcrum which is at an intermediate position in an axial direction of the roller 80a, in a plane including the axes of the rollers 80a, 80b, by a control in accordance with a reading result of the paper discharging side sensor 83.

When the mount 11 is conveyed correctly and straight without meandering, the axis of the pair of rollers 80a, 80b is orthogonal to the conveying direction of the mount 11. At this time, since the side edge of the mount 11 passing through the sensor 83 is at a predetermined position, the sensor 83 does not detect a misalignment of the side edge.

When the side edge of the mount 11 passing through the sensor 83 is deviated from the predetermined position due to meandering of the mount 11, the sensor 83 detects the misalignment of the side edge of the mount 11 and outputs a driving command to the controller 82 of the swing source.

The controller 82 of the swing source swings the bracket 81 through the swing source not shown. Since the axis of the pair of rollers 80a, 80b is made oblique to a direction orthogonal to the conveying direction of the mount 11 when the bracket 81 is swung, the mount 11 is shifted in the direction orthogonal to the conveying direction of the mount 11, so that the meandering of the mount 11 is corrected.

When the meandering of the mount 11 is corrected, the side edge of the mount 11 passing through the sensor 83 comes to a predetermined position, the sensor 83 no longer detects the misalignment of the side edge. The controller 82 of the swing source not shown swings the bracket 81 to a prior position through the swing source, so that the axis of the pair of rollers 80a, 80b comes to be orthogonal to the conveying direction of the mount 11.

As described above, the side edge of the mount 11 conveyed to the peeling device 3 can be constantly kept at the fixed position because the meandering arrester 8 is provided upstream of the peeling device 3 in the mount conveying path. That is, the mount 11 can be prevented from meandering.

As the result, since the side edge of the label 12 stuck to the mount 11 conveyed to the peeling device 3 is always at the same position (position in the direction orthogonal to the conveying direction), the label 12 peeled off from the mount 11 is conveyed toward the lamination device 7 while constantly keeping the side edge at the same position.

Moreover, the mount 11 from which the label 12 is peeled off by the peeling device 3 can be wound on the winding shaft 40 (paper tube for winding 41) of the mount winding device 4 with the side edge aligned, owing to the meandering arrester 8 provided downstream of the peeling device 3 in the mount conveying path.

With the configuration, the mount 11 wound by the mount winding device 4 (wound on the winding shaft 40) can be removed from the winding shaft 40 and reused in another machines.

In Fig. 1, since the mount 11 is wound on the paper tube 41, it can be removed from the winding shaft 40 together with the paper tube 41. Then, the paper tube 41 is attached to a shaft of another machine, and thus the wound mount 11 can be set on another machine and reused, therefore it is easy to do a work of reuse.

As illustrated in Fig. 1, a paper splicing device 9 is provided between the paper feeding portion 2a and the meandering arrester 8 in the mount conveying path of the label feeding device 2. With the configuration, when a next label paper 10 is set on the paper feeding portion 2a, a preceding label paper 10 and the next label paper 10 can be easily connected.

As illustrated in Fig. 1, the release paper feeding device 5 conveys the release paper 14 toward the lamination device 7, and the label 12 which is peeled off from the mount 11 is stuck to the release paper 14.

That is, the release paper feeding device 5 includes a release paper feeding portion 5a for feeding the release paper 14 and a release paper conveying portion 5b for conveying the release paper 14 fed from the release paper feeding portion 5a.

The release paper 14 is a paper having the same structure as that of the mount 11 previously mentioned, but is enough for even a paper having the different structure from the mount 11.

The release paper feeding portion 5a is provided with a release paper feeding shaft 50 to which a paper tube 15 around which the release paper 14 is wound in a roll shape is detachably attached. The release paper feeding shaft 50 is provided with a powder brake (not shown).

The release paper conveying portion 5b includes a third pull roller 51 for conveying the release paper 14 which is fed from the release paper feeding portion 5a, a fourth pull roller 52 which is located downstream of the third pull roller 51 in the conveying direction of the release paper 14, a fifth pull roller 53 which is located downstream of the fourth pull roller 52 in the conveying direction of the release paper 14, and a motor (not shown) for rotationally driving each of the third pull roller 51, the fourth pull roller 52 and the fifth pull roller 53 alone.

In addition, the release paper conveying portion 5b uses pull rollers, but an endless belt may be used in place of the pull rollers .

The label winding device 6 winds the release paper 14 which is conveyed by the release paper feeding device 5 and to which the label 12 peeled off from the mount 11 is stuck.

That is, the label winding device 6 includes a label winding shaft 60, a label winding paper tube 61 which is detachably attached to the label winding shaft 60 and a motor (not shown) for rotationally driving the label winding shaft 60.

Next, an operation of conveying and winding the release paper 14 will be explained.

The paper tube 15 around which the release paper 14 is wound in a roll shape is attached to the release paper feeding shaft 50, and then the release paper 14 in a roll shape is set on the release paper feeding portion 5a. The set release paper 14 is fixed to the label winding paper tube 61 via the third pull roller 51, the fourth pull roller 52 and the fifth pull roller 53. And then each of the third pull roller 51, the fourth pull roller 52, the fifth pull roller 53 and the label winding shaft 60 is rotationally driven by driving each of the motors of the third pull roller 51, the fourth pull roller 52, the fifth pull roller 53 and the label winding shaft 60.

Accordingly, the release paper 14 is conveyed toward the lamination device 7 at the second conveying speed and then the label 12 is stuck to the release paper 14 by the lamination device 7. The release paper 14 to which the label 12 is stuck is wound on the label winding shaft 60.

Therefore, the release paper 14 in a roll shape to which the label 12 is stuck can be easily removed.

The second conveying speed at which the release paper 14 is conveyed is lower than the first conveying speed at which the label paper 10 is conveyed.

The second conveying speed at which the release paper 14 is conveyed is controlled by changing rotational speed of each of the motors of the third pull roller 51, the fourth pull roller 52, the fifth pull roller 53 and the winding shaft 60. In other words, the release paper feeding device 5 is configured such that the second conveying speed at which the release paper 14 is conveyed can be controlled alone.

As shown in Fig. 1, since the meandering arrester 8 is provided between the release paper feeding portion 5a and the third pull roller 51 (that is, upstream of the lamination device 7) in the release paper conveying path, the release paper 14 can be conveyed toward the lamination device 7 without meandering.

Since the meandering arrester 8 has the same structure as with the meandering arrester 8 which is provided in the label feeding device 2, the detailed explanation thereof is omitted. The meandering arrester 8 is attached to an auxiliary frame 1d.

With the configuration, the side edge of the release paper 14 conveyed to the lamination device 7 is always at a fixed position. And, as described above, since the side edge of the label 12 conveyed toward the lamination device 7 is always at a fixed position, the label 12 can be stuck to an appropriate position of the release paper 14.

As illustrated in Fig.1, the paper splicing device 9 is provided between the release paper feeding portion 5a and the meandering arrester 8 in the release paper conveying path of the release paper feeding device 5.

With the configuration, when a next release paper 14 is set on the release paper feeding portion 5a, a preceding release paper 14 and the next release paper 14 can be easily connected.

As illustrated in Figs.1 and 3, the lamination device 7 includes a laminating roller 70 for sticking the label 12 peeled off from the mount 11 by the peeling device 3 to the release paper 14 conveyed by the release paper feeding device 5, a moving mechanism 71 for moving the laminating roller 70 in the conveying direction of the release paper 14, and a supporting member 72 for supporting the release paper 14 so as not to be displaced downward, when the label 12 peeled off from the mount 11 is stuck to the release paper 14.

The laminating roller 70 is in contact with the upper surface of the release paper 14 and is rotated in accordance with conveyance of the release paper 14. That is, the laminating roller 70 is rotatable and rotated by an external force acting thereon. The lamination roller 70 is opposite to the end 30a of the peeling plate 30 and the label 12 peeled off from the mount 11 by the peeling plate 30 is conveyed toward the laminating roller 70.

The moving mechanism 71 moves the laminating roller 70 in the conveying direction of the release paper 14 from the first position which is closest to the end 30a of the peeling plate 30 as shown by a solid line in Fig. 3 to the second position which is farthest from the end 30a of the peeling plate 30 as shown by two-dot chain line in Fig. 3.

The laminating roller 70 moved to the first position and the laminating roller 70 moved to the second position are located downstream of the third pull roller 51 in the conveying direction of the release paper 14 and upstream of the fourth pull roller 52 in the conveying direction of the release paper 14. In other words, the laminating roller 70 moves in the conveying direction of the release paper 14 between the third pull roller 51 and the fourth pull roller 52.

The supporting member 72 is in a form of plate longer than the maximum moving distance of the laminating roller 70, continuing from under the laminating roller 70 at the first position to under the laminating roller 70 at the second position and provided so as to be in contact with a lower surface of the release paper 14 conveyed between the third pull roller 51 and the fourth pull roller 52. That is, the supporting member 72 is provided over a range of movement of the laminating roller 70.

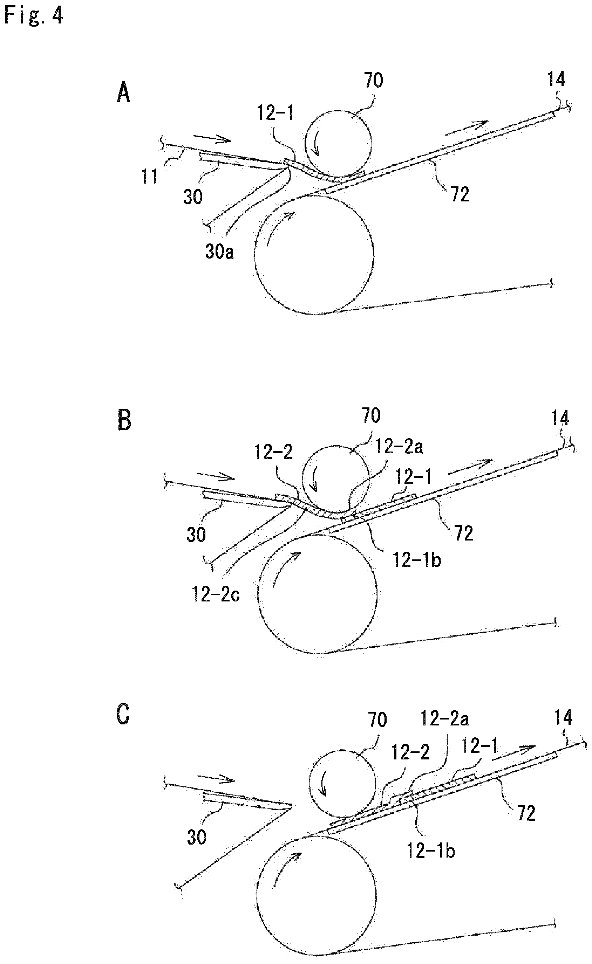

Next, a sticking operation of the label 12 which is peeled off from the mount 11 by the end 30a of the peeling plate 30 to the release paper 14 will be explained with reference to Fig. 4. Note that the label 12 is illustrated thicker than that it actually is in Fig. 4 to facilitate understanding.

The release paper 14 is conveyed at the second conveying speed simultaneously with conveyance of the label paper 10 at the first conveying speed.

Since each of the first conveying speed and the second conveying speed can be controlled alone, the speed ratio of the first conveying speed and the second conveying speed can be arbitrarily set.

During passing of the mount 11 of the label paper 10 through the end 30a of the peeling plate 30, a first label 12-1 firstly peeled off from the mount 11 of the label paper 10 is conveyed toward the laminating roller 70 at the first conveying speed, and then its front edge comes into contact with the peripheral surface of the laminating roller 70 and enters between the release paper 14 and the laminating roller 70.

That is, the laminating roller 70 is rotated in accordance with conveyance of the release paper 14, and since the contact position of the end edge of the first label 12-1 on the peripheral surface of the laminating roller 70 is below the center of rotation of the laminating roller 70, the first label 12-1 smoothly enters between the release paper 14 and the laminating roller 70.

The first label 12-1 which has entered between the release paper 14 and the laminating roller 70 which is rotated in accordance with conveyance of the release paper 14 is pressed on the release paper 14 by the laminating roller 70, and then is stuck to the release paper 14 conveyed at the second conveying speed (see Fig. 4A).

At this time, since a part of the release paper 14 to which the first label 12-1 is stuck is supported by the supporting member 72, is thereby prevented from being displaced downward, the first label 12-1 is stuck to the release paper 14 rigidly.

While the first label 12-1 which is stuck to the release paper 14 is conveyed together with the release paper 14, the first label 12-1 is deflected downwardly between the end 30a of the peeling plate 30 and the laminating roller 70, because the conveying speed of the release paper 14 (the second conveying speed) is lower than the conveying speed of the first label 12-1 (the first conveying speed).

A second label 12-2 secondly peeled off from the mount 11 of the label paper 10 comes into contact with the peripheral surface of the laminating roller 70 as with the first label, and as shown in Fig. 4B, a front end 12-2a in the conveying direction of the second label 12-2 enters between a rear end 12-1b in the conveying direction of the preceding first label 12-1 which has been already stuck to the release roller 14 and the laminating roller 70 which is rotated in accordance with conveyance of the release roller 14, and then the front end 12-2a in the conveying direction of the second label 12-2 and the rear end 12-1b in the conveying direction of the first label 12-1 are pressed by the laminating roller 70. Therefore, the front end 12-2a in the conveying direction of the second label 12-2 is overlapped with and stuck to the rear end 12-1b in the conveying direction of the preceding first label 12-1.

While the second label 12-2 which is overlapped with and stuck to the first label 12-1 is conveyed together with the release paper 14, since the conveying speed of the release paper 14 (the second conveying speed) is lower than the conveying speed of the second label 12-2 (the first conveying speed), the second label 12-2 is deflected downwardly between the end 30a of the peeling plate 30 and the laminating roller 70 as with the first label 12-1.

Then, since a remaining part 12-2c except the front end 12-2a in the conveying direction of the second label 12-2 sequentially enters between the release paper 14 and the laminating roller 70 which is rotated in accordance with conveyance of the release paper 14 and is pressed by the laminating roller 70, the remaining part 12-2c of the second label 12-2 is thereby stuck to the release paper 14 as shown in Fig. 4C.

That is, since the second conveying speed at which the release paper 14 is conveyed is lower than the first conveying speed at which the label paper 10 is conveyed, the second label 12-2 is stuck over the first label 12-1 and the release paper 14.

At this time, since a part to which the second label 12-2 is stuck of the release paper 14 to which the first label 12-1 has been stuck, is supported by the supporting member 72 and is prevented from being displaced downward, the second label 12-2 is stuck over the first label 12-1 and the release paper 14 rigidly.

As with the label 12-2 which is secondly peeled, a front end of the second and succeeding labels 12 peeled off are stuck to a rear end of the preceding label 12 which has been already peeled off and stuck to the release paper 14 and the remaining part thereof is stuck to the release paper 14.

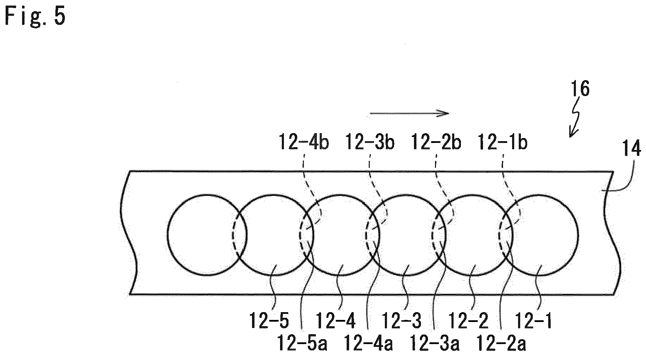

Therefore, as shown in Fig. 5, a number of the labels 12 (12-1, 12-2, 12-3, 12-4, 12-5) are stuck one on top of another so that each part at the front end (12-1a, 12-2a, 12-3a, 12-4a) of the following label 12 in conveying direction is stuck to each rear end (12-1b, 12-2b, 12-3b, 12-4b) of the preceding label 12 in conveying direction which is already peeled, and are sequentially laminated in a series continuously on the release paper 14 while shifting the overlapped portion of the labels 12 in the conveying direction, and thus the laminated label body 16 which comprises the multiple labels 12 laminated in a form of steps can be manufactured.

In the laminated label body 16, the label 12 is not peeled off because the first label 12 which is peeled off from the mount 11 is stuck to the release paper 14 rigidly and the second and succeeding labels 12 are stuck over the preceding label 12 which is already peeled off and stuck to the label 12 and the release paper 14 rigidly.

The release paper 14 to which the multiple labels 12 are stuck is wound on the label winding paper tube 61.

An overlapping length of the rear end in the conveying direction of the preceding label 12 and the front end in the conveying direction of the following label 12, i.e. the amount of overlap, can be determined by the speed ratio of the conveying speed (first conveying speed) of the label paper 10 controlled by the label feeding device 2 and the conveying speed (second conveying speed) of the release paper 14 controlled by the release paper feeding device 5. Here the first conveying speed > the second conveying speed.

For example, as the speed ratio is increased, the amount of overlap between the preceding label 12 and the following label 12 is increased (longer).

As the speed ratio is decreased, the amount of overlap between the preceding label 12 and the following label 12 is decreased (shorter).

As illustrated in Fig. 3, the distance L1 from the end 30a (the position at which the label 12 is peeled) of the peeling plate 30 of the peeling device 3 to the laminating roller 70 (a starting position where the peeled label 12 is brought into contact with the release paper 14) is set to a value suitable for the length L2 in the conveying direction of the label 12, e.g., the value shorter than the length L2 by 3 mm - 15 mm in the conveying direction of the label 12 by moving the laminating roller 70 of the lamination device 7 in the conveying direction of the release paper 14 through the moving mechanism 71.

Therefore, since the labels 12 which are different in the length of the conveying direction can be conveyed to the release paper 14 without being clogged up, the laminated label body can be manufactured by using the labels 12 which are different in the length of the conveying direction.

In addition, if the distance L1 from the end 30a of the peeling plate 30 to the laminating roller 70 is different, the label 12 which has been peeled off from the mount 11 by the end 30a of the peeling plate 30 is not always conveyed to the laminating roller 70.

And so, the label 12 which has been peeled off from the mount 11 is made capable of being conveyed up to the laminating roller 70 by changing the angle of the peeling plate 30 to the horizontal plane by using the angle adjustment mechanism 31 of the peeling device 3, and thereby changing the insertion angle of the label 12 which has been peeled off from the mount 11 by the end 30a of the peeling plate 30 to the horizontal plane directed to the laminating roller 70, that is, the insertion angle of the label 12 directed to the laminating roller 70, even if the distance L1 from the end 30a of the peeling plate 30 to the laminating roller 70 is different.

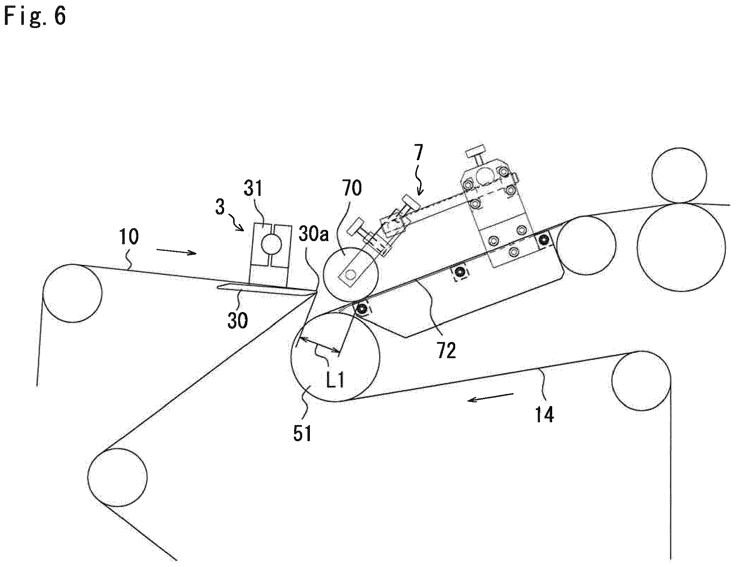

For example, as illustrated in Fig. 6, when the distance L1 from the end 30a of the peeling plate 30 to the laminating roller 70 is shorter than a predetermined value, the angle of the peeling plate 30 to the horizontal plane is set to an angle at which the end 30a is inclined downward relative to its horizontal attitude by using the angle adjustment mechanism 31,and thus the insertion angle of the label 12 directed to the laminating roller 70 is set to a downward angle relative to the horizontal plane.

With the configuration, since the label 12 which has been peeled off from the mount 11 by the end 30a of the peeling plate 30 is conveyed toward the laminating roller 70 and the end edge of the label 12 comes into contact with the peripheral surface of the laminating roller 70 below the center of rotation of the laminating roller 70, the label 12 smoothly enters between the release paper 14 and the laminating roller 70.

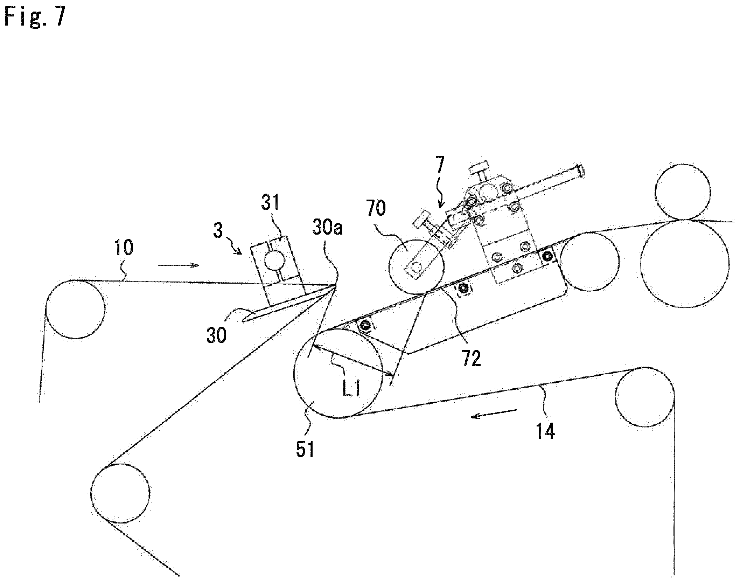

As illustrated in Fig. 7, when the distance L1 from the end 30a of the peeling plate 30 to the laminating roller 70 is longer than the predetermined value, the angle of the peeling plate 30 to the horizontal plane is set to an angle at which the end 30a is inclined upward relative to its horizontal attitude by using the angle adjustment mechanism 31, and thus the insertion angle of the label 12 directed to the laminating roller 70 is set to an upward angle relative to the horizontal plane.

With the configuration, since the label 12 which has been peeled off from the mount 11 by the end 30a of the peeling plate 30 is conveyed toward the laminating roller 70 and the end edge of the label 12 comes into contact with the peripheral surface of the laminating roller 70 below the center of rotation of the laminating roller 70, the label 12 smoothly enters between the release paper 14 and the laminating roller 70.

That is, the angle of the peeling plate 30 to the horizontal plane is adjusted to the angle at which the label 12 having been peeled off from the mount 11 by the end 30a of the peeling plate 30 can be conveyed toward the laminating roller 70.

In addition, there may be a case that the laminating roller 70 is moved and the angle of the peeling plate 30 to the horizontal plane is adjusted in accordance with a paper type, a paper thickness, a shape, and firmness of the label paper 10, and an adhesive force between the mount 11 and the label 12.

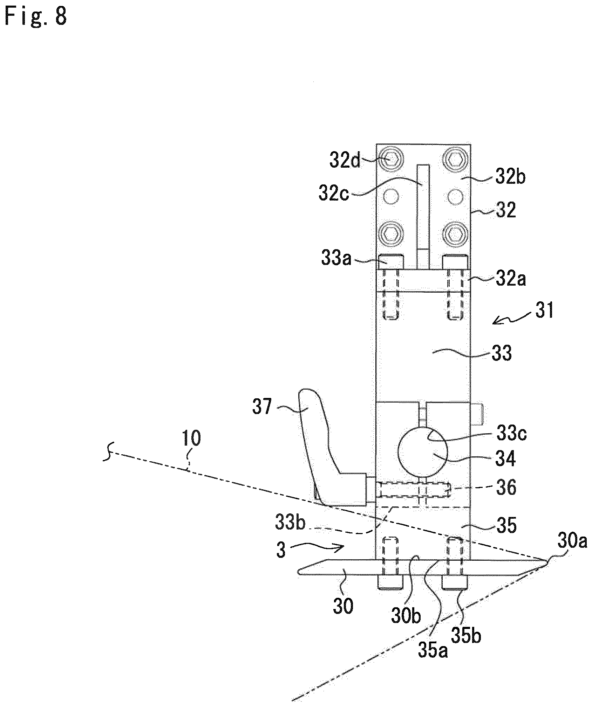

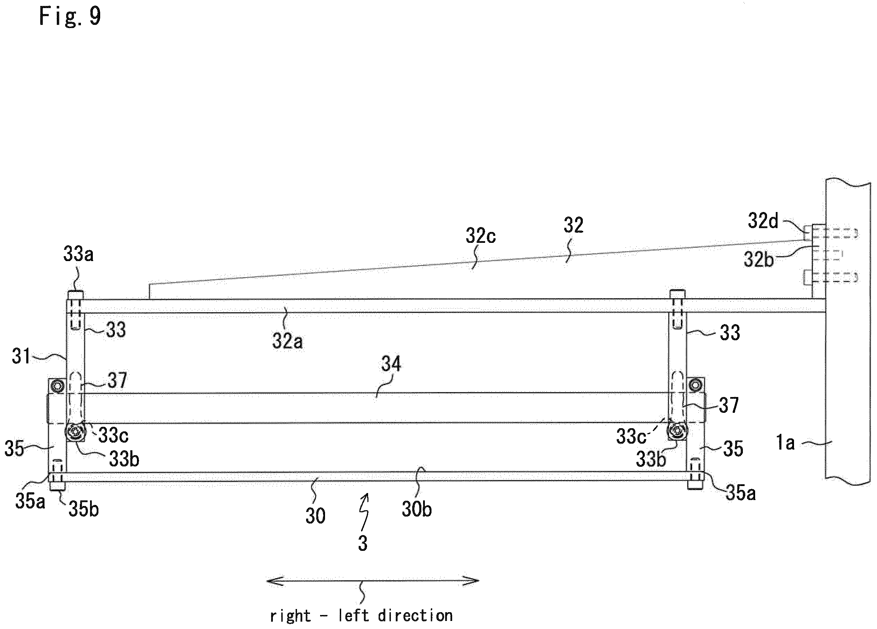

The peeling device 3 will be explained in detail based on Figs. 8 and 9. Fig. 8 is an enlarged front view of the peeling device and Fig. 9 is a side view of the peeling device shown in Fig. 8. A supporting member 32 is attached to the main body frame 1a. The supporting member 32 comprises a lateral plate 32a which is long in length and narrow in width, an attaching piece 32b which is short in length and narrow in width and is attached to an end of the lateral plate 32a in the longitudinal direction, and a reinforcing rib 32c which is attached over the lateral plate 32a and the attaching piece 32b.

The supporting member 32 is attached to the main body frame 1a by fixing the attaching piece 32b on the main body frame 1a by bolts 32d so that the lateral plate 32a is horizontal and its longitudinal direction is a right - left direction. The right - left direction is a direction orthogonal to the conveying direction of the label paper 10.

A pair of vertical plates 33 is fixed downward to portions closer to both ends in the longitudinal direction of the lateral plate 32a by bolts 33a.

Each of the vertical plates 33 has a circular hole 33c directed in the right - left direction respectively, and a peeling plate attaching shaft 34 is mounted between the circular holes 33c by inserting both end thereof rotatably into the circular holes 33c. Each of the circular holes 33c is a discontinuous circular hole of which a part of the inner periphery thereof is opened to a lower surface 33b of the vertical plate 33.

A pair of peeling plate mounting members 35 is fit into the both ends of the peeling plate attaching shaft 34 and thus fixed downward thereto, respectively.

The peeling plate 30 is fixed over a lower surface 35a of the pair of the peeling plate mounting members 35 by a bolt 35b. The peeling plate 30 is in a form of plate whose length in the right - left direction is longer than a length of the label paper 10 in the direction orthogonal to the conveying direction.

With the configuration, the peeling plate 30 is swingable together with the peeling plate attaching shaft 34 in the conveying direction of the label paper 10. The angle of the peeling plate 30 to the horizontal plane is changed by swinging the peeling plate 30 in the conveying direction of the label paper 10. That is, the angle of the peeling plate 30 to the horizontal plane is an angle of a surface (upper surface of the peeling plate 30) 30b directed to the conveying direction of the label paper 10 to the horizontal plane.

A screw rod 36 is screwed to the vertical plate 33 across the discontinuous part of the circular hole 33c. A peeling plate fixing lever 37 is fixed to this screw rod 36.

Since the circular hole 33c is narrowed and then tights the peeling plate attaching shaft 34 when the screw rod 36 is rotated in a tightening direction (one direction) by the peeling plate fixing lever 37, the peeling plate attaching shaft 34 is fixed so as not to rotate.

Since the circular hole 33c is widened and then releases tightening of the peeling plate attaching shaft 34 when the screw rod 36 is rotated in a loosening direction (the other direction) by the peeling plate fixing lever 37, the peeling plate attaching shaft 34 is made rotatable.

That is, the vertical plate 33, the peeling plate attaching shaft 34, the peeling plate mounting member 35, the screw rod 36 and the peeling plate fixing lever 37 constitute the angle adjustment mechanism 31.

Next, a changing operation of the angle of the peeling plate 30 to the horizontal plane will be explained.

At first, the peeling plate 30 is made to be horizontally swingable by rotating the screw rod 36 in the loosening direction by using the peeling plate fixing lever 37 so that the peeling plate attaching shaft 34 is rotatable.

In this state, the peeling plate 30 is horizontally swung by hand, so that the angle of the peeling plate 30 to the horizontal plane is changed.

By rotating the screw rod 36 in a tightening direction by using the peeling plate fixing lever 37 so that the peeling plate attaching shaft 34 is fixed so as not to rotate, while the peeling plate 30 is hold by hand so as not to swing in the horizontal direction, the peeling plate 30 is fixed so as not to swing in the horizontal direction.

Accordingly, the angle of the peeling plate 30 to the horizontal plane can be easily changed.

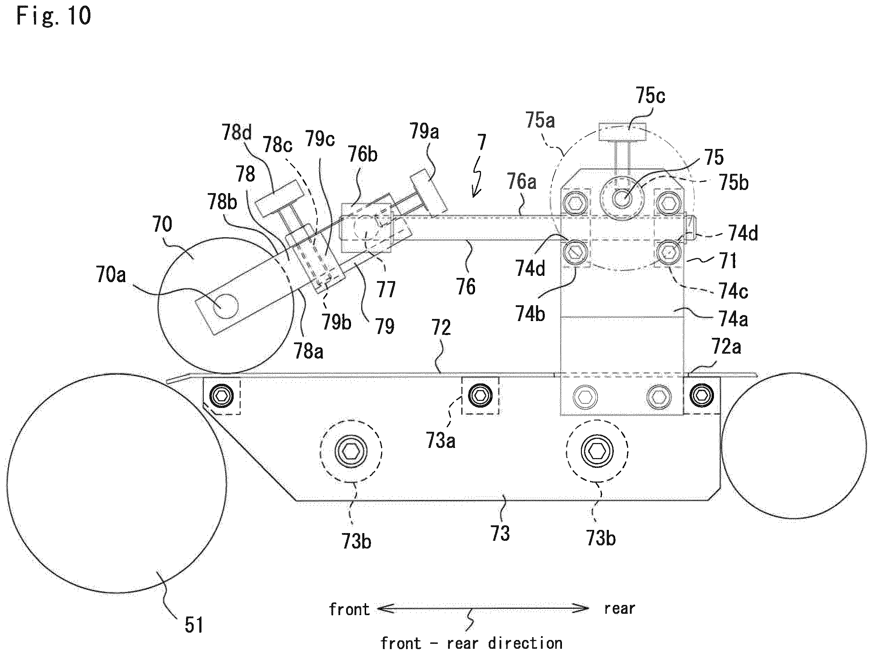

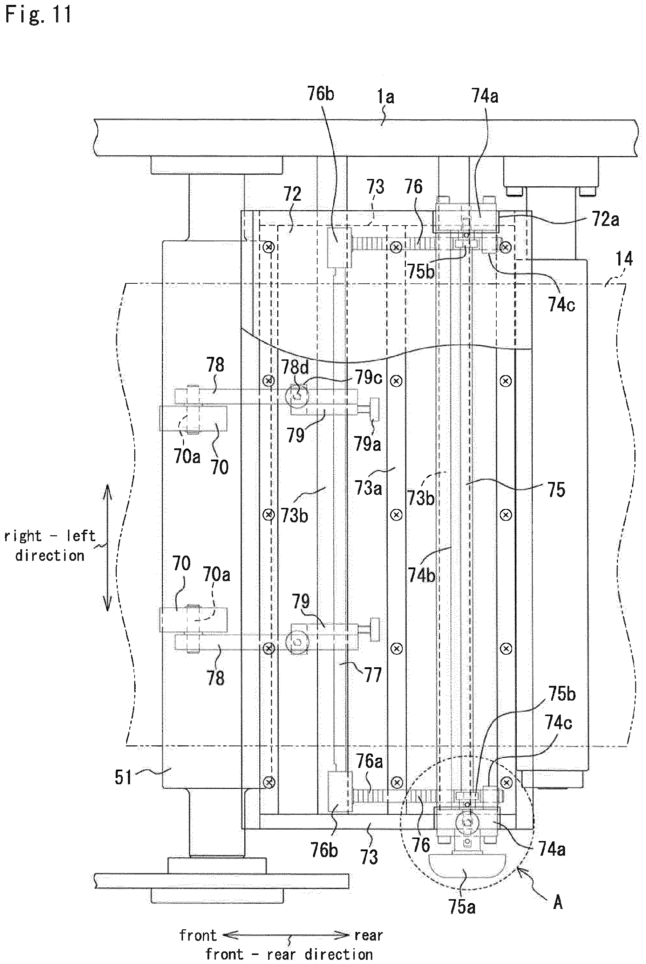

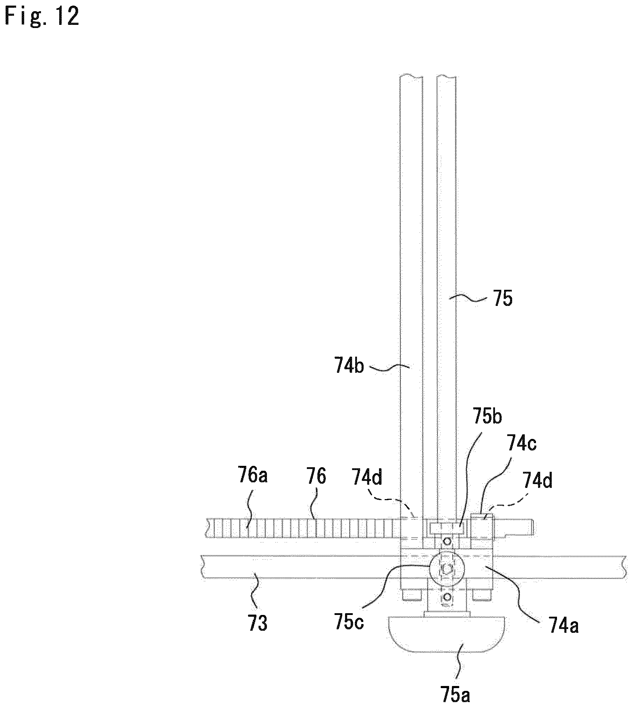

The lamination device 7 will be explained in detail based on Figs.10, 11 and 12. Fig.10 is an enlarged front view of the lamination device, Fig. 11 is a plan view of the lamination device shown in Fig.10a and Fig.12 is an enlarged view of A portion of the lamination device shown in Fig. 11. In Fig.10, the illustration of the release paper 14 is omitted, and in Fig.11, the release paper 14 is illustrated by two-dot chain line.

In addition, the explanation will be made, assuming the conveying direction of the release paper 14 as a front-rear direction, the downstream side in the conveying direction as a rear side, the upstream side in the conveying direction as a front side and the direction orthogonal to the conveying direction of the release paper 14 as a right - left direction.

The lamination device 7 includes a pair of right and left frames 73 extending in the front-rear direction, and the pair of right and left frames 73 is connected by a plurality of connected members 73a so as to be parallel to each other. The pair of right and left frames 73 is attached to the main body frame 1a through a pair of front- rear stays 73b. Each of the frames 73 is located downward of the release paper 14, an interval in the right - left directions between the right and left frames 73 is wider than the length (width) in the direction orthogonal to the conveying direction of the release paper 14, and the right and left frames 73 are located outward of the side edges in the width direction of the release paper 14.

The supporting member 72 is in a form of plate whose right and left length is a length over the two frames 73 and whose front-rear length is slightly longer than the front-rear length of the frame 73.

The supporting member 72 is attached over the upper surfaces of the right and left frames 73 and a plurality of the connecting members 73a.

Right and left first brackets 74a are attached upward to portions close to the rear side portions of the frames 73, respectively. Each of the first brackets 74a is projected upward through a notch 72a of the supporting member 72.

A long second bracket 74b is fixed across portions close to the front side portions of the right and left first brackets 74a, and the right and left first brackets 74a are connected by the second bracket 74b.

Short third brackets 74c are fixed to portions close to the rear side portions of the right and left first brackets 74a, respectively so as to be opposed to each other in the right - left direction.

A shaft 75 extending in the right - left direction is rotatably attached over intermediate portions in the front-rear direction of the right and left first brackets 74a. A knob 75a for rotary operation is attached to an end portion of the shaft 75 at the side of one of the right and left first brackets 74a (the first bracket 74a on the other side opposed to the main body frame 1a). A locking bolt 75c which locks the shaft 75 so as not to rotate is provided on one of the right and left first brackets 74a.

Spur gears 75b are fixedly attached to portions close to both the right and left ends of the shaft 75, respectively. The spur gears 75b are located at the same positions in the right - left direction as the third brackets 74c.

Circular holes 74d are bored in portions close to both the right and left ends of the second bracket 74b and both the third brackets 74c, respectively. Right and left round racks 76 which extend in the front-rear direction are inserted and slidably mounted through the holes 74d of the second bracket 74b and the holes 74d of the third brackets 74c in the front- rear direction through slide bearings (not shown), respectively.

The round rack 76 is one to which a rack-processing is applied in the axial direction of its round shaft.

The right and left round racks 76 are parallel each other. The right and left spur gears 75b are meshed with gear portions 76a of the right and left round racks 76, respectively.

Blocks 76b are attached to front end portions of the right and left round racks 76, respectively. A laminating roller mounting member 77 is fixedly attached over the right and left blocks 76b.

The two laminating rollers 70 are attached to the laminating roller mounting member 77 with a space in the right - left direction.

Next, a moving operation of the laminating roller 70 in the front-rear direction will be explained.

The shaft 75 is made rotatable by loosening the locking bolt 75c, and then the shaft 75 is rotated by the knob 75a. The spur gears 75b are rotated by rotation of the shaft 75, and the round racks 76b are moved in the front-rear direction by rotation of the gears 75b.

The laminating rollers 70 are moved in the front-back direction together with the laminating roller mounting member 77 by movement in the front- rear direction of the round racks 76. After the laminating roller 70 has moved in the front- rear direction of the laminating roller 70, the laminating roller 70 is positioned at a predetermined position in the front-rear direction by locking the shaft 75 so as not to rotate by the locking bolt 75c.

That is, the moving mechanism 71 which moves the laminating roller 70 in the front-rear direction is constituted by the first, the second, the third brackets 74a, 74b, 74c, the shaft 75, the knob 75a, the locking bolt 75c, the spur gears 75b, the round rack 76, the blocks 76b and the laminating roller mounting member 77.

In addition, the structure of the moving mechanism 71 is not limited to the above structure but may be any other structure to move the laminating roller 70.

For example, a structure that rotates the shaft 75 by using a servo motor and the like, a structure that moves a nut which is screwed onto a feeding screw rod rotated by using a servo motor and the like, and a structure that uses a cylinder which is extended or contracted by fluid pressure can be employed.

In addition, the structure of the moving mechanism 71 may be a structure that automatically moves the laminating roller 70 according to the length in the conveying direction of the label 12.

Next, a mounting structure of the laminating roller 70 will be explained.

Rear end parts of two levers 78 are vertically attached swingable to the positions apart in the right - left direction of the laminating roller mounting member 77 respectively. Each of the levers 78 extends in the front-rear direction and its front end is located forward of the laminating roller mounting member 77.

The laminating roller 70 is rotatably mounted on front end of each of the levers 78 through a supporting shaft 70a.

In this embodiment, the laminating roller mounting member 77 is a shaft having a circular cross-section, and the laminating roller mounting member 77 is fitted to be swingable to a circular hole formed in rear end of the lever 78.

That is, the laminating roller 70 is mounted to be vertically swingable (movable) on the laminating roller mounting member 77 together with the lever 78 and swung downward by a weight of the laminating roller 70 and the lever 78.

With the configuration, the laminating roller 70 is pressed (pressurized) on the release paper 14 by a force corresponding to the weight of the laminating roller 70 and the lever 78.

Moreover, when such trouble that the label 12 gets entangled in or is clogged up the laminating roller 70 is caused, the trouble can be eliminated by moving the laminating roller 70 upward by hand.

Rear end parts of two supporting members 79 are fixedly attached to the positions spaced apart each other in the right - left direction of the laminating roller mounting member 77 respectively so as not to vertically swing. In this embodiment, a circular hole formed in rear end of the supporting member 79 is fitted to be swingable on the laminating roller mounting member 77, and the supporting member 79 is fixed so as not to swing by pressing a fixing screw 79a screwed in the supporting member 79 on the laminating roller mounting member 77.

Therefore, the mounting angle of the supporting member 79 to the horizontal plane can be adjusted by loosening the fixing screw 79a as to vertically swing the supporting member 79, or by tightening the fixing screw 79a to fix the supporting member 79 so as not to swing.

Each of the supporting members 79 is adjacent to either right side surface or left side surface of each of the levers 78 and at the front end of each of supporting members 79, includes a supporting portion 79b facing a lower surface 78a of the lever 78 and a guide portion 79c facing a side surface of the lever 78 opposite to the side surface to which the supporting member 79 is adjacent.

The lever 78 is formed with a screw hole 78c penetrating from an upper surface 78b to the lower surface 78a and an adjusting screw 78d is provided so as to be screwed to this screw hole 78c. A tip of the adjusting screw 78d may project from the lower surface 78a and come into contact with the supporting portion 79b of the supporting member 79.

Moreover, by preventing the tip end of the adjusting screw 78d from being in contact with the supporting portion 79b of the supporting member 79, the laminating roller 70 is brought into the state that the lamination roller 70 is pressed on the release paper 14 by weight of the laminating roller 70 and the lever 78.

In this state, by tightening the adjusting screw 78d to make the tip of the adjusting screw 78d project from the lower surface 78a and come into contact with the supporting portion 79b of the supporting member 79, the lever 78 is swung upward and thus the laminating roller 70 is moved upward, so that the pressing force acting on the release paper 14 is decreased. The pressing force acting on the release paper 14 can be adjusted by changing the tightening of the adjusting screw 78d.

That is, the supporting member 79 and the adjusting screw 78d constitute a laminating roller pressing force adjustment mechanism.

Therefore, since the pressing force of the laminating roller 70 acting on the release paper 14 can be set to a value suited to a type of the label 12, different kinds of the labels 12 can be stuck to the release paper 14 rigidly.

The different kind of the label 12 is a label different in surface smoothness, a label different in thickness, a label different in elasticity or a label different in two or more of surface smoothness, thickness and elasticity, and the like.

For example, generally, the pressing force of the laminating roller 70 acting on the release paper 14 is increased in the case of the label whose surface is smooth, and the pressing force is decreased in the case of the label whose surface is not smooth. The pressing force of the laminating roller 70 acting on the release paper 14 is increased in the case of the label which is thick, and the pressing force is decreased in the case of the label which is thin.

The pressing force of the laminating roller 70 acting on the release paper 14 is increased in the case of the label which is elastic, and the pressing force is decreased in the case of the label which is not elastic.

Further, there may be a case that conflicting adjustments of the pressing force are required for the label which is different in elasticity or a label different in two or more among surface smoothness, thickness and elasticity, and the like, in this case the adjustment is appropriately performed by increasing or decreasing the pressing force.

The laminating roller pressing force adjustment mechanism is not necessarily need to be installed. In this embodiment, the two laminating rollers 70 having a short length in the right - left direction (axial direction) are used, but three or more laminating rollers 70 may be used or one laminating roller 70 having a long length in the right - left direction (axial direction) may be used.

## Claims

1. A manufacturing device of a laminated label body including:
a label feeding device (2) for conveying a mount (11) to which labels (12) are stuck at a first conveying speed;
a peeling device (3) including a peeling plate (30) for peeling off the labels (12) from the mount (11) conveyed at the first conveying speed;
a release paper feeding device (5) for conveying a release paper (14) at a second conveying speed; and
a lamination device (7) for sticking the labels (12) peeled off from the mount (11) by the peeling device (3) to the release paper (14) conveyed at the second conveying speed, wherein
the second conveying speed is lower than the first conveying speed, and an end in a conveying direction of the label (12) peeled off from the mount (11) is overlapped with a rear end in the conveying direction of a preceding label (12) which has been peeled off from the mount (11) and stuck to the release paper (14) in advance, so that the label (12) is stuck over the preceding label (12) and the release paper (14), and the manufacturing device being **characterised in that**
the lamination device(7) comprises:
a laminating roller (70)for pressing and sticking a label (12) peeled off from the mount (11) to an upper surface of the release paper (14),
a supporting member (72) which is in contact with a lower surface of the release paper (14), and
a moving mechanism (71) that moves the laminating roller (70) in the conveying direction of the release paper (14);
the supporting member (72) is provided over a range of movement of the laminating roller (70); and
the peeling device (3) includes an angle adjustment mechanism (31), and is configured such that the mount (11) is folded back at a sharp angle around an end of the peeling plate (30) to peel off the label (12) from the mount (11) while passing through the end of the peeling plate (30), and
the angle adjustment mechanism (31) changes an insertion angle of the label (12) peeled off directed to the laminating roller (70) by changing an angle of the peeling plate (30) to a horizontal plane.

2. The manufacturing device of the laminated label body according to claim 1, wherein
the label feeding device (2) and the release paper feeding device (5) are configured such that each of the first conveying speed and the second conveying speed can be controlled alone.

3. The manufacturing device of the laminated label body according to _claim 1 or claim 2, wherein
meandering arresters (8) are provided upstream of the peeling device (3) in a mount conveying path of the label feeding device (2) and upstream of the lamination device (7) in a release paper conveying path of the release paper feeding device (5), respectively.

4. The manufacturing device of the laminated label body according to any one of claims 1 to 3, wherein
the lamination device (7) is provided with a pressing force adjustment mechanism to adjust a pressing force of the laminating roller (70) acting on the release paper (14).

## Patentansprüche

1. Eine Herstellungsvorrichtung für einen laminierten Etikettenkörper, welche Folgendes aufweist:
eine Etikettenzuführvorrichtung (2) zum Transportieren einer Halterung (11), an der Etiketten (12) anhaften, mit einer ersten Transportgeschwindigkeit;
eine Abziehvorrichtung (3) mit einer Abziehplatte (30) zum Abziehen der Etiketten (12) von der mit der ersten Transportgeschwindigkeit transportierten Halterung (11);
eine Trennpapier-Zuführvorrichtung (5) zum Transportieren eines Trennpapiers (14) mit einer zweiten Transportgeschwindigkeit; und
eine Laminiervorrichtung (7) zum Anhaften der von der Halterung (11) durch die Abziehvorrichtung (3) abgezogenen Etiketten (12) auf das mit der zweiten Transportgeschwindigkeit transportierte Trennpapier (14),
wobei
die zweite Transportgeschwindigkeit niedriger als die erste Transportgeschwindigkeit ist, und ein Ende in einer Transportrichtung des von der Halterung (11) abgezogenen Etiketts (12) mit einem hinteren Ende in der Transportrichtung eines vorherigen Etiketts (12) überlappt ist, welches von der Halterung (11) abgezogen und vorher auf das Trennpapier (14) geklebt wurde, so dass das Etikett (12) über das vorherige Etikett (12) und das Trennpapier (14) geklebt wird, und wobei die Herstellungsvorrichtung **dadurch gekennzeichnet ist, dass** die Laminiervorrichtung (7) Folgendes umfasst:
eine Laminierwalze (70) zum Pressen und Ankleben eines von der Halterung (11) abgezogenen Etiketts (12) an eine Oberseite des Trennpapiers (14),
ein Stützelement (72), das mit einer Unterseite des Trennpapiers (14) in Kontakt steht, und
einen Bewegungsmechanismus (71), der die Laminierwalze (70) in der Transportrichtung des Trennpapiers (14) bewegt;
wobei das Stützelement (72) über einen Bewegungsbereich der Laminierwalze (70) vorgesehen ist; und
die Abziehvorrichtung (3) einen Winkelverstellmechanismus (31) beinhaltet und so konfiguriert ist, dass die Halterung (11) in einem spitzen Winkel um ein Ende der Abziehplatte (30) herum zurückgeklappt wird, um das Etikett (12) von der Halterung (11) abzuziehen, während es durch das Ende der Abziehplatte (30) verläuft, und
der Winkelverstellmechanismus (31) einen Einbringwinkel des abgezogenen Etiketts (12) zu der Laminierwalze (70) ändert, indem er einen Winkel der Abziehplatte (30) gegenüber einer horizontalen Ebene verändert.

2. Herstellungsvorrichtung des laminierten Etikettenkörpers gemäß Anspruch 1, wobei
die Etikettenzuführvorrichtung (2) und die Trennpapier-Zuführvorrichtung (5) so konfiguriert sind, dass die erste Transportgeschwindigkeit und die zweite Transportgeschwindigkeit jeweils einzeln gesteuert werden können.

3. Herstellungsvorrichtung des laminierten Etikettenkörpers gemäß Anspruch 1 oder Anspruch 2, wobei
Mäander-Stopeinrichtungen (8) der Abziehvorrichtung (3) vorgeschaltet in einem Halterungs-Transportweg der Etikettenzuführvorrichtung (2) bzw. der Laminiervorrichtung (7) vorgeschaltet in einem Trennpapier-Transportweg der Trennpapier-Zuführvorrichtung (5) vorgesehen sind.

4. Herstellungsvorrichtung des laminierten Etikettenkörpers gemäß einem der Ansprüche 1 bis 3, wobei
die Laminiervorrichtung (7) mit einem Presskraft-Einstellmechanismus versehen ist, um eine Presskraft der auf das Trennpapier (14) wirkenden Laminierwalze (70) einzustellen.

## Revendications

1. Dispositif de fabrication d'un corps d'étiquettes stratifié incluant :
un dispositif (2) d'alimentation d'étiquettes pour transporter un support (11) auquel des étiquettes (12) sont collées à une première vitesse de transport ;
un dispositif (3) de pelage incluant une plaque (30) de pelage pour peler les étiquettes (12) du support (11) transporté à la première vitesse de transport ;
un dispositif (5) d'alimentation de papier antiadhésif pour transporter un papier antiadhésif (14) à une deuxième vitesse de transport ; et
un dispositif (7) de stratification pour coller les étiquettes (12) pelées du support (11) par le dispositif (3) de pelage sur le papier antiadhésif (14) transporté à la deuxième vitesse de transport,
dans lequel
la deuxième vitesse de transport est inférieure à la première vitesse de transport, et une extrémité dans un sens de transport de l'étiquette (12) pelée du support (11) se chevauche avec une extrémité arrière dans le sens de transport d'une étiquette (12) précédente qui a été pelée du support (11) et collée sur le papier antiadhésif (14) au préalable, de telle sorte que l'étiquette (12) est collée sur l'étiquette (12) précédente et le papier antiadhésif (14), et le dispositif de fabrication étant **caractérisé en ce que**
le dispositif (7) de stratification comprend :
un cylindre de stratification (70) pour presser et coller une étiquette (12) pelée du support (11) sur une surface supérieure du papier antiadhésif (14),
un élément support (72) qui est en contact avec une surface inférieure du papier antiadhésif (14), et
un mécanisme (71) de déplacement qui déplace le cylindre de stratification (70) dans le sens de transport du papier antiadhésif (14) ;
l'élément support (72) est prévu sur une plage de mouvement du cylindre de stratification (70) ; et
le dispositif (3) de pelage inclut un mécanisme (31) d'ajustement d'angle, et est configuré de telle manière que le support (11) est replié à un angle aigu autour d'une extrémité de la plaque (30) de pelage pour peler l'étiquette (12) du support (11) en passant à travers l'extrémité de la plaque (30) de pelage, et
le mécanisme (31) d'ajustement d'angle change un angle d'insertion de l'étiquette (12) pelée dirigée vers le cylindre de stratification (70) en changeant un angle de la plaque (30) de pelage par rapport à un plan horizontal.

2. Dispositif de fabrication du corps d'étiquettes stratifié selon la revendication 1, dans lequel
le dispositif (2) d'alimentation d'étiquettes et le dispositif (5) d'alimentation de papier antiadhésif sont configurés de telle manière que chacune de la première vitesse de transport et de la deuxième vitesse de transport peut être commandée seule.

3. Dispositif de fabrication du corps d'étiquettes stratifié selon la revendication 1 ou la revendication 2, dans lequel
des dispositifs d'arrêt de méandres (8) sont prévus en amont du dispositif (3) de pelage dans un chemin de transport de support du dispositif (2) d'alimentation d'étiquettes et en amont du dispositif (7) de stratification dans un chemin de transport de papier antiadhésif du dispositif (5) d'alimentation de papier antiadhésif, respectivement.

4. Dispositif de fabrication du corps d'étiquettes stratifié selon l'une quelconque des revendications 1 à 3, dans lequel
le dispositif (7) de stratification est prévu avec un mécanisme d'ajustement de force de pression pour ajuster une force de pression du cylindre de stratification (70) agissant sur le papier antiadhésif (14).
